# EUROPEAN PATENT SPECIFICATION

(11) **EP 1 452 787 B1**
(45) Date of publication and mention of the grant of the patent: **28.06.2006**
(21) Application number: 03100490.6
(22) Date of filing: 27.02.2003
(51) Int. Cl.: F16K 31/42

(54) **Flow-reversing valve**
Umkehrschieber
Tiroir d'inversion

(43) Date of publication of application: 01.09.2004
(73) Proprietor: Delphi Technologies, Inc., Troy, MI 48007 (US)
(72) Inventor: Heys, Malcolm, S., 8053 Bertrange (LU)
(74) Representative: Beissel, Jean

(56) References cited:
- EP-A- 1 247 670
- GB-A- 966 836
- US-A- 3 400 736

## Description

### Introduction

The present invention relates to a flow-reversing valve for reversing the flow direction of a fluid through a fluid circuit.

Such flow-reversing valves are e.g. used for reversing the flow direction of a refrigerant through an automotive HVAC circuit. Indeed, in some automotive vehicles, e.g. in vehicles powered by traction motors supplied with electrical power from onboard fuel cells or batteries or in vehicles with advanced diesel engines, the internal combustion engine cannot be relied upon to provide the heat necessary for heating the passenger compartment of the vehicle in cold climate conditions. It has therefore been proposed to operate the air conditioning system as a heat pump, by reversing the flow of refrigerant through the HVAC circuit.

In order to reverse the flow of refrigerant, the HVAC circuit comprises a flow-reversing valve. The latter receives high-pressure refrigerant from a compressor and directs the refrigerant to either the inside or outside heat exchanger, depending on the operating mode of the HVAC system. Furthermore, the flow-reversing valve receives low-pressure refrigerant from the other one of the heat exchangers and leads it back to the compressor. The flow-reversing valve is actuated by means of an actuator to operate the HVAC system in either cooling mode or heating mode.

A flow-reversing valve typically comprises a housing with an axially extending bore, in which a piston is arranged. The piston comprises a piston shaft and two axially spaced piston discs for dividing the bore into a central chamber and two axially spaced end chambers. The piston further comprises a dividing wall for separating the central chamber into a high-pressure chamber and a low-pressure chamber. The flow-reversing valve comprises a high-pressure fluid inlet port for receiving high-pressure fluid from a compressor, a low-pressure fluid outlet port for returning low-pressure fluid to the compressor and at least two circuit ports.

The high-pressure fluid inlet port is in fluid communication with one of the circuit ports via the high-pressure chamber while the low-pressure fluid outlet port is in fluid communication with the other one of the circuit ports via the low-pressure chamber. The direction of flow of the fluid through the circuit depends on the position of the piston in the bore. When the piston is in a first position, wherein the first circuit port is connected to the high-pressure chamber and the second circuit port is connected to the low-pressure chamber, the fluid flows from the first circuit port through the circuit to the second circuit port. The refrigerant flows from the flow-reversing valve to the outside heat exchanger, then to the inside heat exchanger before returning to the compressor via the flow-reversing valve, i.e. the HVAC system operates in cooling mode. On the other hand, when the piston is in a second position, wherein the first circuit port is connected to the low-pressure chamber and the second circuit port is connected to the high-pressure chamber, the fluid flows from the second circuit port through the circuit to the first circuit port. The refrigerant flows from the flow-reversing valve to the inside heat exchanger, then to the outside heat exchanger before returning to the compressor via the flow-reversing valve, i.e. the HVAC system operates in heat pump mode.

The position of the piston is determined by the fluid pressure reigning in the end chambers. A control valve is provided for delivering high-pressure fluid to one of the end chambers and low-pressure fluid to the other chamber. Due to the pressure difference between the two end chambers, the piston is moved towards one or the other end of the housing.

One example of such a flow-reversing valve is described in US-B-6,295,828, wherein an external control valve is provided for directing high-pressure fluid to either the first or the second of the end chambers while directing the low-pressure fluid to the other one of the end chambers. Due to the pressure difference between the two end chambers, the piston is moved towards one or the other end of the housing, thereby delivering high-pressure fluid to either the first or second circuit port. The fluid hence either flows through the circuit either from the first circuit port to the second circuit port or from the second circuit port to the first circuit port. A disadvantage of this flow-reversing valve is that the control valve is externally arranged and needs to be connected by pipes to the two end chambers and the inlet and outlet ports of the flow-reversing valve.

Another example of such a flow-reversing valve is described in EP-A-1 247 670, wherein the control valve is arranged inside the flow-reversing valve. The control valve comprises a rotary shaft arranged inside the piston shaft connecting the first piston disc to the second piston disc. The piston shaft comprises two bores for connecting the high-pressure chamber and the low-pressure chamber to a distribution chamber within the piston shaft. The distribution chamber comprises a communication passage to the first end chamber and a communication passage to the second end chamber. A wall is arranged in the distribution chamber for each time connecting one bore with one communication passage. In a first position of the rotary shaft, a first bore is in fluid communication with a first communication passage while a second bore is in fluid communication with a second communication passage, thereby fluidly connecting e.g. the high-pressure chamber to the first end chamber and the low-pressure chamber to the second end chamber. As a consequence, the piston is moved into its first position. Through rotation of the rotary shaft, the position of the wall in the distribution chamber is changed and the first bore is in fluid communication with the second communication passage while the second bore is in fluid communication with the first communication passage, thereby fluidly connecting the high-pressure chamber to the second end chamber and the low-pressure chamber to the first end chamber. As a consequence, the piston is moved into its second position.

Such flow-reversing valves may prove to be satisfactory with traditional refrigerants, such as e.g. R134a. In recent years, there has however been a tendency to use the more environmentally friendly CO₂ as refrigerant. In high-pressure systems, such as e.g. CO₂ systems, the pressure differences between the high-pressure side and the low-pressure side of the system can be considerably higher. Furthermore, a CO₂ refrigerant presents a problem of a smaller molecule, which tends to leak more. Due to the combination of higher pressure differences and smaller molecules, the risk of fluid leaking from the high-pressure side to the low-pressure side is increased, thereby compromising the efficiency of the system.

### Object of the invention

The object of the present invention is to provide an improved flow-reversing valve, which does not have the above-mentioned disadvantages. This object is achieved by a flow-reversing valve as claimed in claim 1.

### General description of the invention

The present invention proposes a flow-reversing valve for controlling the direction of flow of a fluid through a fluid circuit, the flow-reversing valve comprising:
a housing having an axially extending bore therein;
a piston arranged in the axially extending bore, the piston having a piston shaft and at least two axially spaced piston discs, the at least two piston discs dividing the axially extending bore into a central chamber and axially spaced first and second end chambers, the piston being axially moveable in the bore between a first position and a second position;
a high-pressure fluid inlet port and a low-pressure fluid outlet port;
a control valve for directing high-pressure fluid to one of the first and second end chambers and for directing low-pressure fluid to the other one of the first and second end chambers; and
a first circuit port and a second circuit port for feeding the fluid through the fluid circuit.

According to an important aspect of the invention, the flow-reversing valve further comprises:
first sealing means arranged between the first end chamber and the central chamber, the first sealing means being arranged such that, under the force of a pressure difference of the fluid in the first and second end chambers, a contact surface of a first piston disc is axially pressed against the first sealing means when the piston is in its first position; and
second sealing means arranged between the second end chamber and the central chamber, the second sealing means being arranged such that, under the force of a pressure difference of the fluid in the first and second end chambers, a contact surface of a second piston disc is axially pressed against the second sealing means when the piston is in its second position.

The greater the pressure difference between the end chambers, the stronger the sealing force between the central chamber and the respective end chamber. A tight seal between the high-pressure fluid in the central chamber and the low-pressure fluid in the respective end chamber is thereby ensured, even if the pressure difference between the high-pressure side and the low-pressure side is very important and the molecules of the fluid are very small. Due to the fact that the high-pressure side and the low-pressure side are effectively sealed, fluid leaking from the high-pressure side to the low-pressure side can be reduced and the efficiency of the system is improved.

Preferably, a dividing element is connected to the piston for dividing the central chamber into a high-pressure chamber and a low-pressure chamber, the high-pressure chamber being fluidly connected to the high-pressure fluid inlet port and the low-pressure chamber being fluidly connected to the low-pressure fluid outlet port.

The housing can have circular cross-section and the first and second sealing means then preferably are annular sealing rings.

The first sealing means preferably has a chamfered sealing surface facing the first piston disc, the first piston disc having a corresponding chamfered contact surface; and the second sealing means preferably has a chamfered sealing surface facing the second piston disc, the second piston disc having a corresponding chamfered contact surface. By providing chamfered sealing and contact surfaces, these surfaces can be enlarged, thereby providing better sealing effect. Furthermore, the chamfer allows the piston disc to be centred on the sealing means.

The control valve can be an external control valve connected to the two end chambers and the inlet and outlet ports of the flow-reversing valve by means of pipes. However, according to a preferred embodiment, the control valve comprises a rotary shaft located in a central bore arranged in the piston shaft, wherein the rotary shaft defines a distribution chamber within the piston shaft and comprises a dividing wall for dividing the distribution chamber into first and second sub-chambers. A first communication passage is provided for fluidly connecting the first sub-chamber of the distribution chamber to the first end chamber, and a second communication passage is provided for fluidly connecting the second sub-chamber of the distribution chamber to the second end chamber. The piston shaft then preferably comprises a first bore fluidly connecting one of the first and second sub-chambers of the distribution chamber to the high-pressure chamber, and a second bore fluidly connecting the other one of the first and second sub-chambers of the distribution chamber to the low-pressure chamber. Such a control valve with rotating piston entails considerable savings in space, as the control valve is located entirely within the flow-reversing valve. Furthermore, there is no need to provide pipes for connecting the respective chambers to the control valve.

Advantageously, third sealing means are arranged between the rotary shaft and the piston shaft. The third sealing means ensures that the fluid from the sub-chamber containing fluid at high pressure cannot leak to the sub-chamber containing fluid at low pressure.

Preferably, the third sealing means is arranged in one plane with the dividing wall.

According to a preferred embodiment, the rotary shaft comprises a groove for receiving the third sealing means. The groove ensures that the third sealing means remains in place upon rotation of the rotary shaft.

Preferably, the groove comprises a tapering. The groove can e.g. comprise a base and sidewalls, wherein the base has edge portions raised in direction of the sidewalls. Under the force of the pressure difference of the fluid in the first and second sub-chambers of the distribution chamber, the third sealing means is axially pressed towards one of the sidewalls of the groove. Due to the tapering -or the raised edge portion- the third sealing means is furthermore radially pressed against the piston shaft. The greater the pressure difference between the first and second sub-chambers of the distribution chamber, the tighter the third sealing means is wedged between the raised edge portion and the piston shaft. A tight seal between the high-pressure fluid in one of the sub-chambers and the low-pressure fluid in the other of the sub-chambers is thereby ensured. Due to the fact that the high-pressure side and the low-pressure side are effectively sealed, fluid leaking from the high-pressure side to the low-pressure side can be further reduced and the efficiency of the system is further improved.

A sealing insert is preferably arranged inside the axially extending bore between the dividing element and the housing, the dividing element being radially pressed against the sealing insert under the force of a pressure difference of the fluid in the high-pressure chamber and the low-pressure chamber. The sealing insert thereby ensures that the fluid from the high-pressure chamber cannot leak to the low-pressure chamber. The greater the pressure difference between the high- and low-pressure chambers, the stronger the sealing force. A tight seal between the high-pressure fluid in the high-pressure chamber and the low-pressure fluid in the low-pressure chamber is thereby ensured, even if the pressure difference between the high-pressure side and the low-pressure side is very important. Due to the fact that the high-pressure side and the low-pressure side are effectively sealed, fluid leaking from the high-pressure side to the low-pressure side can be further reduced and the efficiency of the system is further improved.

### Detailed description with respect to the figures

The present invention will be more apparent from the following description of some not limiting embodiments with reference to the attached drawings, wherein:
- Fig.1: shows a section view through a flow-reversing valve according to the invention wherein the piston is in a first position;
- Fig.2: shows a section view through the flow-reversing valve of Fig.1 wherein the piston is in a second position;
- Fig.3: shows an enlarged section view through a portion of the rotary shaft within the piston shaft of Fig.1;
- Fig.4: shows a perspective view of the portion of the rotary shaft of Fig.3;
- Fig.5: shows a cut through the flow-reversing valve of Fig.1 along line A-A; and
- Fig.6: shows an enlarged section view of a groove of Fig.3.

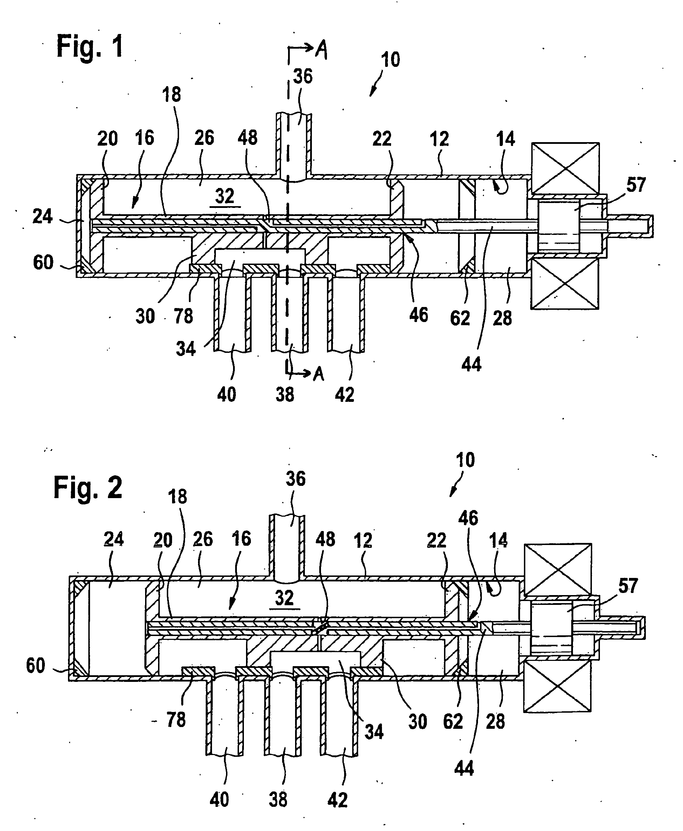

Figs 1 and 2 show a cut through a flow-reversing valve 10 for controlling the direction of flow of a fluid in a fluid circuit. The valve 10 comprises a housing 12 having an axially extending bore 14 therein. A piston 16 having a piston shaft 18 and two axially spaced piston discs 20, 22 is arranged in the axially extending bore 14. The piston discs 20, 22 divide the axially extending bore 14 into a first end chamber 24, a central chamber 26 and a second end chamber 28. The piston 16 is axially moveable in the bore 14 between a first position and a second position. A dividing element 30 is connected to the piston 16 for dividing the central chamber 26 into a high-pressure chamber 32 and a low-pressure chamber 34. The high-pressure chamber 32 is fluidly connected to a high-pressure fluid inlet port 36 and the low-pressure chamber 34 is fluidly connected to a low-pressure fluid outlet port 38.

The flow-reversing valve 10 further comprises a first circuit port 40 and a second circuit port 42. The first and second circuit ports 40, 42 are arranged such that, when the piston 16 is in a first position, as shown in Fig.1, the first circuit port 40 is in fluid communication with the low-pressure chamber 34 and the second circuit port 42 is in fluid communication with the high-pressure chamber 32 and that, when the piston 16 is in a second position, as shown in Fig.2, the first circuit port 40 is in fluid communication with the high-pressure chamber 32 and the second circuit port 42 is in fluid communication with the low-pressure chamber 34.

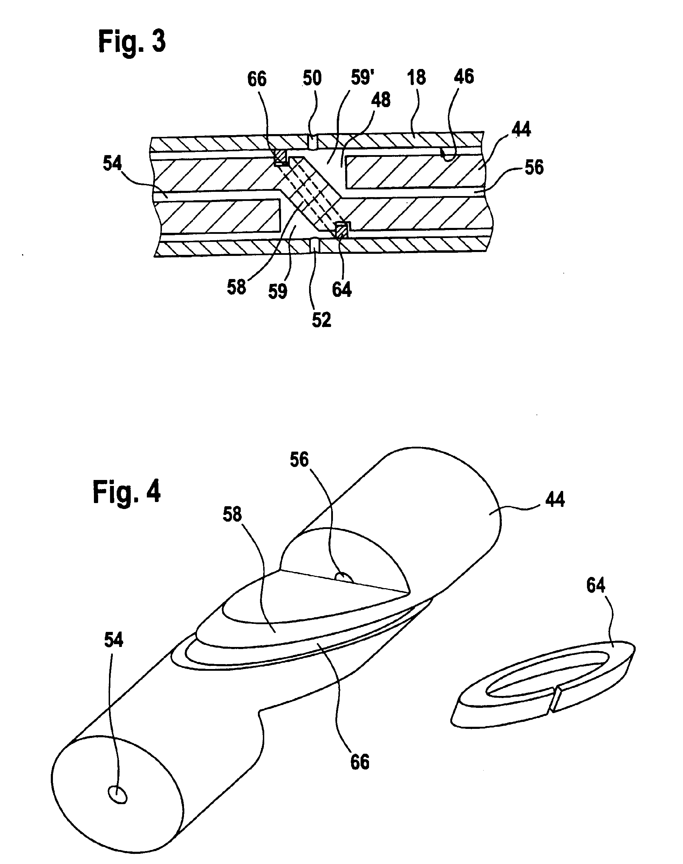

The piston shaft 16 of the flow-reversing valve 10 comprises a rotary shaft 44 extending into a central bore 46 arranged in the piston shaft 18. Fig.3 shows an enlarged view of a portion of the rotary shaft 44 within the piston shaft 18. The piston shaft 18 comprises an internal distribution chamber 48, a first bore 50 for fluidly connecting the distribution chamber 48 to the high-pressure chamber 32 and a second bore 52 for fluidly connecting the distribution chamber 48 to the low-pressure chamber 34. The piston shaft 18 further comprises a first communication passage 54 for fluidly connecting the distribution chamber 48 to the first end chamber 24 and a second communication passage 56 for fluidly connecting the distribution chamber 48 to the second end chamber 28. It will be understood that the communication passages 54, 56 can be arranged within the rotary shaft 44 and/or between the rotary shaft 44 and the central bore 46 of the piston shaft 18.

A dividing wall 58 is arranged in the distribution chamber 48 for dividing the latter into a first sub-chamber 59 and a second sub-chamber 59'. The first sub-chamber 59 fluidly connects one of the bores 50, 52 to the first communication passage 54 and the second sub-chamber 59' fluidly connects the other one of the bores 50, 52 to the second communication passage 56. The dividing wall 58 is connected to the rotary shaft 44, such that, upon rotation of the rotary shaft 44, the dividing wall 58 rotates within the distribution chamber 48. The position of the rotating shaft 44 and hence the position of the dividing wall 58 within the distribution chamber 48 determines whether high-pressure fluid is delivered to the first or the second end chamber 24, 28, the low-pressure fluid being delivered to the other end chamber 24, 28. This in turn determines the position of the piston 16 within the axially extending bore 14 and the direction of flow of the fluid through the system. In order to change the position of the rotary shaft 44, the latter is connected to an actuator 57.

First sealing means 60 are arranged in the axially extending bore 14 so as to fluidly seal the first end chamber 24 from the high-pressure chamber 32 when the piston 16 is in its first position as shown in Fig.1. The pressure difference between the first end chamber 24 and the second end chamber 28 axially presses the first piston disc 20 against the first sealing means 60. The greater the pressure difference between the end chambers 24, 28, the stronger the sealing force between the first end chamber 24 and the high-pressure chamber 32.

Second sealing means 62 are arranged in the axially extending bore 14 so as to fluidly seal the second end chamber 28 from the high-pressure chamber 32 when the piston 16 is in its second position as shown in Fig.2. The pressure difference between the first end chamber 24 and the second end chamber 28 axially presses the second piston disc 22 against the second sealing means 62. The greater the pressure difference between the end chambers 24, 28, the stronger the sealing force between the second end chamber 28 and the high-pressure chamber 32.

The first and second sealing means 60, 62 can be annular sealing rings. The first and second piston discs 20, 22 preferably have a chamfered contact surface cooperating with a corresponding sealing surface of the sealing means 60,62.

Third sealing means 64 are arranged between the piston shaft 18 and the rotary shaft 44 for sealing the high-pressure side of the distribution chamber 48 from the low-pressure side of the distribution chamber 48.

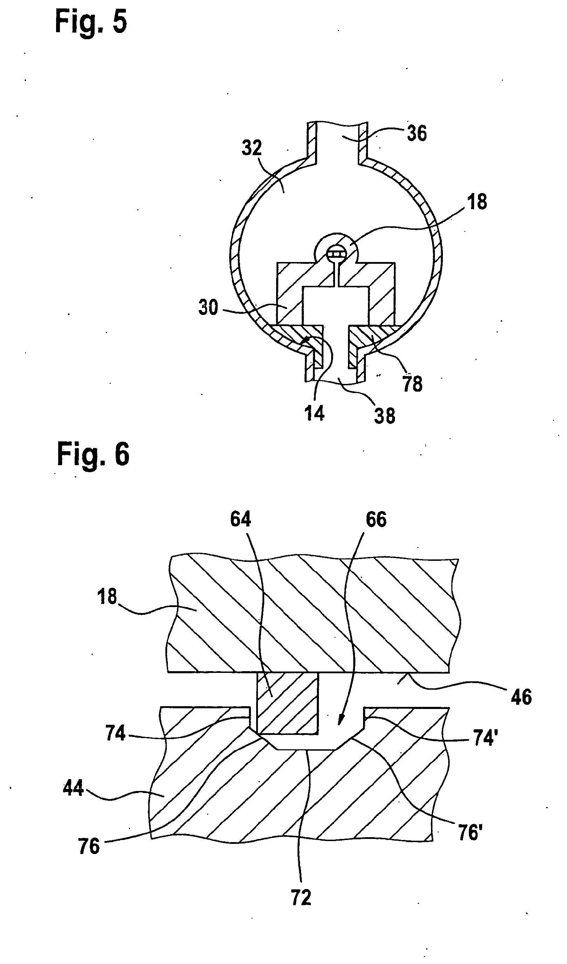

As shown in Figs 3 and 4, a groove 66 is preferably arranged in the rotary shaft 44 for receiving the third sealing means 64 therein. The pressure difference between the fluid in the first sub-chamber 59 and the fluid in the second sub-chamber 59'of the distribution chamber 48 axially pushes the third sealing means 64 towards a sidewall of the groove 66. The configuration of the groove 66 can be more easily explained by referring to Fig.6. The groove 66 comprises a base 72 and sidewalls 74, 74'. The base 72 has edge portions 76, 76' raised in direction of the sidewalls 74, 74'. Under the force of the pressure difference of the fluid in the first and second sub-chambers 59, 59' of the distribution chamber 48, the third sealing means 64 is axially pressed towards one of the sidewalls 74 of the groove 66. Due to the tapering, resp. the raised edge portion 76, the third sealing means 64 is further radially pressed against the piston shaft 18. The greater the pressure difference between the first and second sub-chambers 59, 59', the tighter the third sealing means 64 is wedged between the raised edge portion 76 and the piston shaft 18.

It will be appreciated that a sealing insert 76 is arranged between the dividing element 30 and the inner wall of the housing 12 of the flow-reversing valve 10 so as to fluidly seal the high-pressure chamber 32 from the low-pressure chamber 34. Due to the pressure difference in the high- and low-pressure chambers 32, 34, the dividing element 30 is radially pressed against the sealing insert 76. The greater the pressure difference between the high- and low-pressure chambers 32, 34, the stronger the sealing force. The sealing insert 76 can be seen in Figs 1 and 2 and also in Fig 5, which is a cut along line A-A through the flow-reversing valve 10 of Fig.1.

### Reference signs

- 10: flow-reversing valve
- 12: housing
- 14: axially extending bore
- 16: piston
- 18: piston shaft
- 20: first piston disc
- 22: second piston disc
- 24: first end chamber
- 26: central chamber
- 28: second end chamber
- 30: dividing element
- 32: high-pressure chamber
- 34: low-pressure chamber
- 36: high-pressure fluid inlet port
- 38: low-pressure fluid outlet port
- 40: first circuit port
- 42: second circuit port
- 44: rotary shaft
- 46: central bore
- 48: distribution chamber
- 50: first bore
- 52: second bore
- 54: first communication passage
- 56: second communication passage
- 57: actuator
- 58: dividing wall
- 59: first sub-chamber
- 59': second sub chamber
- 60: first sealing means
- 62: second sealing means
- 64: third sealing means
- 66: groove
- 72: base
- 74: sidewall
- 74': sidewall
- 76: edge portion
- 76': edge portion
- 78: sealing insert

## Claims

1. Flow-reversing valve (10) for controlling the direction of flow of a fluid through a fluid circuit, said flow-reversing valve (10) comprising:
a housing (12) having an axially extending bore (14) therein;
a piston (16) arranged in said axially extending bore (14), said piston (16) having a piston shaft (18) and at least two axially spaced piston discs (20, 22), said at least two piston discs (20, 22) dividing said axially extending bore (14) into a central chamber (26) and axially spaced first and second end chambers (24, 28), said piston (16) being axially moveable in said bore (14) between a first position and a second position;
a high-pressure fluid inlet port (36) and a low-pressure fluid outlet port (38);
a control valve for directing high-pressure fluid to one of said first and second end chambers (24, 28) and for directing low-pressure fluid to the other one of said first and second end chambers (24, 28); and
a first circuit port (40) and a second circuit port (42) for feeding said fluid through said fluid circuit
**characterised by**
first sealing means (60) arranged between said first end chamber (24) and said central chamber (26), said first sealing means (60) being arranged such that, under the force of a pressure difference of said fluid in said first and second end chambers (24, 28), a contact surface of a first piston disc (20) is axially pressed against said first sealing means (60) when said piston (16) is in its first position; and
second sealing means (62) arranged between said second end chamber (28) and said central chamber (26), said second sealing means (62) being arranged such that, under the force of a pressure difference of said fluid in said first and second end chambers (24, 28), a contact surface of a second piston disc (22) is axially pressed against said second sealing means (62) when said piston (16) is in its second position.

2. Flow-reversing valve (10) according to claim 1, wherein said piston (16) comprises a dividing element (30) for dividing said central chamber (26) into a high-pressure chamber (32) and a low-pressure chamber (34), said high-pressure chamber (32) being fluidly connected to said high-pressure fluid inlet port (36) and said low-pressure chamber (34) being fluidly connected to said low-pressure fluid outlet port (38).

3. Flow-reversing valve (10) according to claim 1, wherein said housing (12) has circular cross-section and said first and second sealing means (60, 62) are annular sealing rings.

4. Flow-reversing valve (10) according to claim 1 or 2, wherein
said first sealing means (60) has a chamfered sealing surface facing said first piston disc (20), said first piston disc (20) having a corresponding chamfered contact surface; and
said second sealing means (62) has a chamfered sealing surface facing said second piston disc (22), said second piston disc (22) having a corresponding chamfered contact surface.

5. Flow-reversing valve (10) according to any of the previous claims, wherein said control valve comprises a rotary shaft (44) located in a central bore (46) arranged in said piston shaft (18),
said rotary shaft (44) defining a distribution chamber (48) within said piston shaft(18) and comprising:
a dividing wall (58) for dividing said distribution chamber (48) into first and second sub-chambers (59, 59'),
a first communication passage (54) fluidly connecting said first sub-chamber (59) of said distribution chamber (48) to said first end chamber (24), and
a second communication passage (56) fluidly connecting said second sub-chamber (59') of said distribution chamber (48) to said second end chamber (28);
said piston shaft (18) comprising:
a first bore (50) fluidly connecting one of said first and second sub-chambers (59, 59') of said distribution chamber (48) to said high-pressure chamber (34),
a second bore (52) fluidly connecting the other one of said first and second sub-chambers (59, 59') of said distribution chamber (48) to said low-pressure chamber (38).

6. Flow-reversing valve (10) according to claim 5, comprising:
third sealing means (64) arranged between said rotary shaft (44) and said piston shaft (18).

7. Flow-reversing valve (10) according to claim 5 or 6, wherein said third sealing means (64) is arranged in one plane with said dividing wall (58).

8. Flow-reversing valve (10) according to any of claims 5 to 7, wherein said rotary shaft (44) comprises a groove (66) for receiving said third sealing means (64).

9. Flow-reversing valve (10) according to claim 8, wherein said groove (66) comprises a tapering.

10. Flow-reversing valve (10) according to any of the claims 2 to 9, wherein a sealing insert (78) is arranged inside said axially extending bore (14) between said dividing element (30) and said housing (12), said dividing element (30) being radially pressed against said sealing insert (78) under the force of a pressure difference of said fluid in said high-pressure chamber (32) and said low-pressure chamber (34).

## Patentansprüche

1. Umkehrventil (10) zur Regelung der Strömungsrichtung eines Fluids durch einen Fluidkreislauf, wobei das Umkehrventil (10) umfasst:
ein Gehäuse (12) mit einer axial darin verlaufenden Bohrung (14);
einen Kolben (16), der in der axial verlaufenden Bohrung (14) angeordnet ist, wobei der Kolben (16) eine Kolbenstange (18) und mindestens zwei axial beabstandete Kolbenscheiben (20, 22) aufweist, wobei die mindestens zwei Kolbenscheiben (20, 22) die axial verlaufende Bohrung (14) in eine Mittelkammer (26) und axial beabstandete erste und zweite Endkammern (24, 28) unterteilen, wobei der Kolben (16) axial in der Bohrung (14) zwischen einer ersten Position und einer zweiten Position beweglich ist;
einen Hochdruckfluid-Einlass (36) und einen Niederdruckfluid-Auslass (38);
ein Regelventil, um Hochdruckfluid zu einer von der ersten und zweiten Endkammer (24, 28) zu leiten und Niederdruckfluid zur anderen von der ersten und zweiten Endkammer (24, 28) zu leiten; und
eine erste Kreislauföffnung (40) und eine zweite Kreislauföffnung (42), um das Fluid durch den Fluidkreislauf zu leiten;
**gekennzeichnet durch**
ein erstes Dichtmittel (60), das zwischen der ersten Endkammer (24) und der Mittelkammer (26) angeordnet ist, wobei das erste Dichtmittel (60) so angeordnet ist, dass unter der Kraft einer Druckdifferenz des Fluids in der ersten und zweiten Endkammer (24, 28) eine Kontaktfläche einer ersten Kolbenscheibe (20) axial gegen das erste Dichtmittel (60) gedrückt wird, wenn sich der Kolben (16) in seiner ersten Position befindet; und
ein zweites Dichtmittel (62), das zwischen der zweiten Endkammer (28) und der Mittelkammer (26) angeordnet ist, wobei das zweite Dichtmittel (62) so angeordnet ist, dass unter der Kraft einer Druckdifferenz des Fluids in der ersten und zweiten Endkammer (24, 28) eine Kontaktfläche einer zweiten Kolbenscheibe (22) axial gegen das zweite Dichtmittel (62) gedrückt wird, wenn sich der Kolben (16) in seiner zweiten Position befindet.

2. Umkehrventil (10) nach Anspruch 1, wobei der Kolben (16) ein Trennelement (30) umfasst, um die Mittelkammer (26) in eine Hochdruckkammer (32) und eine Niederdruckkammer (34) zu unterteilen, wobei die Hochdruckkammer (32) fluidisch mit dem Hochdruckfluid-Einlass (36) und die Niederdruckkammer (34) fluidisch mit dem Niederdruckfluid-Auslass (38) verbunden ist.

3. Umkehrventil (10) nach Anspruch 1, wobei das Gehäuse (12) einen kreisförmigen Querschnitt aufweist und das erste und zweite Dichtmittel (60, 62) ringförmige Dichtringe sind.

4. Umkehrventil (10) nach Anspruch 1 oder 2, wobei
das erste Dichtmittel (60) eine der ersten Kolbenscheibe (20) zugewandte abgeschrägte Dichtfläche aufweist, wobei die erste Kolbenscheibe (20) eine entsprechende abgeschrägte Kontaktfläche aufweist; und
das zweite Dichtmittel (62) eine der zweiten Kolbenscheibe (22) zugewandte abgeschrägte Dichtfläche aufweist, wobei die zweite Kolbenscheibe (22) eine entsprechende abgeschrägte Kontaktfläche aufweist.

5. Umkehrventil (10) nach irgendeinem der vorangehenden Ansprüche, wobei das Regelventil eine Welle (44) umfasst, die in einer in der Kolbenstange (18) angeordneten Mittelbohrung (46) angebracht ist,
wobei die Welle (44) eine Verteilungskammer (48) in der Kolbenstange (18) definiert und umfasst:
eine Trennwand (58), um die Verteilungskammer (48) in eine erste und zweite Unterkammer (59, 59') zu unterteilen,
einen ersten Verbindungskanal (54), der die erste Unterkammer (59) der Verteilungskammer (48) fluidisch mit der ersten Endkammer (24) verbindet, und
einen zweiten Verbindungskanal (56), der die zweite Unterkammer (59') der Verteilungskammer (48) fluidisch mit der zweiten Endkammer (28) verbindet;
wobei die Kolbenstange (18) umfasst:
eine erste Bohrung (50), die eine von der ersten und zweiten Unterkammer (59, 59') der Verteilungskammer (48) fluidisch mit der Hochdruckkammer (34) verbindet,
eine zweite Bohrung (52), die die andere von der ersten und zweiten Unterkammer (59, 59') der Verteilungskammer (48) fluidisch mit der Niederdruckkammer (38) verbindet.

6. Umkehrventil (10) nach Anspruch 5, umfassend:
ein drittes Dichtmittel (64), das zwischen der Welle (44) und der Kolbenstange (18) angeordnet ist.

7. Umkehrventil (10) nach Anspruch 5 oder 6, wobei das dritte Dichtmittel (64) in einer Ebene mit der Trennwand (58) angeordnet ist.

8. Umkehrventil (10) nach irgendeinem der Ansprüche 5 bis 7, wobei die Welle (44) eine Aussparung (66) zur Aufnahme des dritten Dichtmittels (64) umfasst.

9. Umkehrventil (10) nach Anspruch 8, wobei die Aussparung (66) eine Verjüngung umfasst.

10. Umkehrventil (10) nach irgendeinem der Ansprüche 2 bis 9, wobei ein Dichteinsatz (78) in der axial verlaufenden Bohrung (14) zwischen dem Trennelement (30) und dem Gehäuse (12) angeordnet ist, wobei das Trennelement (30) unter der Kraft einer Druckdifferenz des Fluids in der Hochdruckkammer (32) und der Niederdruckkammer (34) radial gegen den Dichteinsatz (78) gedrückt wird.

## Revendications

1. Distributeur d'inversion (10) pour commander le sens d'écoulement d'un fluide à travers un circuit de fluide, ledit distributeur d'inversion (10) comprenant :
un boîtier (12) ayant en son sein un alésage s'étendant axialement (14);
un piston (16) disposé dans ledit alésage s'étendant axialement (14), ledit piston (16) comportant une tige de piston (18) et au moins deux disques de piston axialement espacés (20, 22), lesdits au moins deux disques de piston (20, 22) divisant ledit alésage s'étendant axialement (14) en une chambre centrale (26) et en première et seconde chambres d'extrémité axialement espacées (24, 28), ledit piston (16) étant axialement mobile dans ledit alésage (14) entre une première position et une seconde position;
un orifice d'entrée de fluide à haute pression (36) et un orifice de sortie de fluide à basse pression (38);
une soupape de commande pour diriger le fluide à haute pression vers l'une desdites première et seconde chambres d'extrémité (24, 28) et pour diriger le fluide à basse pression vers l'autre desdites première et seconde chambres d'extrémité (24, 28); et
un premier orifice de circuit (40) et un second orifice de circuit (42) pour délivrer ledit fluide à travers ledit circuit de fluide,
**caractérisé par**
un premier moyen d'étanchéité (60) disposé entre ladite première chambre d'extrémité (24) et ladite chambre centrale (26), ledit premier moyen d'étanchéité (60) étant configuré de sorte que, sous la force d'une différence de pression dudit fluide dans lesdites première et seconde chambres d'extrémité (24, 28), une surface de contact d'un premier disque de piston (20) est pressée axialement contre ledit premier moyen d'étanchéité (60) lorsque ledit piston (16) est dans sa première position; et
un deuxième moyen d'étanchéité (62) disposé entre ladite seconde chambre d'extrémité (28) et ladite chambre centrale (26), ledit deuxième moyen d'étanchéité (62) étant configuré de sorte que, sous la force d'une différence de pression dudit fluide dans lesdites première et seconde chambres d'extrémité (24, 28), une surface de contact d'un second disque de piston (22) est pressée axialement contre ledit second moyen d'étanchéité (62) lorsque ledit piston (16) est dans sa seconde position.

2. Distributeur d'inversion (10) selon la revendication 1, dans lequel ledit piston (16) comprend un élément de séparation (30) pour diviser ladite chambre centrale (26) en une chambre à haute pression (32) et une chambre à basse pression (34), ladite chambre à haute pression (32) étant reliée de manière fluidique audit orifice d'entrée de fluide à haute pression (36) et ladite chambre à basse pression (34) étant reliée de manière fluidique audit orifice de sortie de fluide à basse pression (38).

3. Distributeur d'inversion (10) selon la revendication 1, dans lequel ledit boîtier (12) présente une section transversale circulaire et lesdits premier et deuxième moyens d'étanchéité (60, 62) sont des anneaux d'étanchéité annulaires.

4. Distributeur d'inversion (10) selon la revendication 1 ou 2, dans lequel
ledit premier moyen d'étanchéité (60) présente une surface d'étanchéité chanfreinée faisant face audit premier disque de piston (20), ledit premier disque de piston (20) présentant une surface de contact chanfreinée correspondante; et
ledit deuxième moyen d'étanchéité (62) présente une surface d'étanchéité chanfreinée faisant face audit second disque de piston (22), ledit second disque de piston (22) présentant une surface de contact chanfreinée correspondante.

5. Distributeur d'inversion (10) selon l'une quelconque des revendications précédentes, dans lequel ladite soupape de commande comprend un arbre rotatif (44) situé dans un alésage central (46) disposé dans ladite tige de piston (18),
ledit arbre rotatif (44) définissant une chambre de distribution (48) à l'intérieur de ladite tige de piston (18) et comprenant :
une paroi de séparation (58) pour diviser ladite chambre de distribution (48) en première et seconde sous-chambres (59, 59'),
un premier passage de communication (54) reliant de manière fluidique ladite première sous-chambre (59) de ladite chambre de distribution (48) à ladite première chambre d'extrémité (24), et
un second passage de communication (56) reliant de manière fluidique ladite seconde sous-chambre (59') de ladite chambre de distribution (48) à ladite seconde chambre d'extrémité (28);
ladite tige de piston (18) comprenant :
un premier alésage (50) reliant de manière fluidique l'une desdites première et seconde sous-chambres (59, 59') de ladite chambre de distribution (48) à ladite chambre à haute pression (32),
un second alésage (52) reliant de manière fluidique l'autre desdites première et seconde sous-chambres (59, 59') de ladite chambre de distribution (48) à ladite chambre à basse pression (34).

6. Distributeur d'inversion (10) selon la revendication 5, comprenant :
un troisième moyen d'étanchéité (64) disposé entre ledit arbre rotatif (44) et ladite tige de piston (18).

7. Distributeur d'inversion (10) selon la revendication 5 ou 6, dans lequel ledit troisième moyen d'étanchéité (64) est disposé dans un plan avec ladite paroi de séparation (58).

8. Distributeur d'inversion (10) selon l'une quelconque des revendications 5 à 7, dans lequel ledit arbre rotatif (44) comprend une rainure (66) pour recevoir ledit troisième moyen d'étanchéité (64).

9. Distributeur d'inversion (10) selon la revendication 8, dans lequel ladite rainure (66) comprend une conicité.

10. Distributeur d'inversion (10) selon l'une quelconque des revendications 2 à 9, dans lequel un insert d'étanchéité (78) est disposé à l'intérieur dudit alésage s'étendant axialement (14) entre ledit élément de séparation (30) et ledit boîtier (12), ledit élément de séparation (30) étant pressé radialement contre ledit insert d'étanchéité (78) sous la force d'une différence de pression dudit fluide dans ladite chambre à haute pression (32) et ladite chambre à basse pression (34).
